# EUROPEAN PATENT SPECIFICATION

(11) **EP 1 155 620 B1**
(45) Date of publication and mention of the grant of the patent: **10.08.2005**
(21) Application number: 00201749.9
(22) Date of filing: 18.05.2000
(51) Int. Cl.: A23D 9/05, A23L 1/30, A23L 1/302, A23L 1/304

(54) **Dietary supplement comprising vitamins, minerals and polyunsaturated fatty acids**
Nahrungsergänzungsmittel mit Vitaminen, Mineralien und mehrfach ungesättigten Fettsäuren
Suppléments diététiques avec des vitamines, des minéraux et des acides gras polyunsatures

(43) Date of publication of application: 21.11.2001
(60) Divisional application: 05075535.4
(73) Proprietor: Q-mega healthcare A/S, 2730 Herlev (DK)
(72) Inventor: Lystrup, Kern, 3500 Varloese (DK); Laudrup, Michael, 2950 Vedbak (DK); Kreutzfeldt, Mogens, 3070 Snekkersten (DK); Knudsen, Leif, 8500 Grena (DK)
(74) Representative: Elmeros, Claus

(56) References cited:
- EP-A- 0 266 323
- EP-A- 0 276 772
- WO-A-89/08988
- WO-A-97/35487
- WO-A-97/35488
- WO-A-99/53777
- FR-A- 2 737 849
- FR-A- 2 760 358
- FR-A- 2 761 887

## Description

The present invention relates to a tablet containing a nutritional composition for use as a dietary supplement.

It is widely acknowledged to enrich the daily diet with a nutritional supplement such as one or more tablets containing a selection of vitamins and minerals. The daily amount of tablets is chosen so that the vitamin and mineral contents of the tablets correspond to recommended daily amounts.

In addition to the vitamin and mineral supplements, nutrition experts often recommend to supplement the diet with fish oil, in particular if seafood is vacant from the diet. It is recognised that people, such as Eskimos, who consume large quantities of fish and other seafood products rich in these oils have a far lower risk than most other populations of suffering from various heart and circulatory disorders, which are among the major killers of our time.

The active ingredients in the fish oil are polyunsaturated fatty acids with chains of 18, 20 or 22 carbon atoms with 2-6 double bonds. There are two kinds: n-3 omega and n-6 omega fatty acids. These acids are essential and the human body needs them but cannot produce them. Thus, they must be supplied in the diet. The n-6 omega fatty acid is found in many vegetable oils and other oil products.

However, the omega-3 acids EPA and DHA are only found in fish and other marine life. The fish oil is therefore the most important food source for the omega-3 fatty acids.

In order to receive the required amount of fish oil every day, fish oil in liquid form may be taken besides the vitamin and mineral pills. The liquid fish oil may preferably be taken in a capsule form. However, some people who supplement several grams of fish oil each day will experience gastrointestinal upset and burp up a "fishy" smell even hours after the fish oil is taken. Many people may therefore refrain from supplementing their diet with fish oil capsules.

Other drawbacks of vitamin and mineral pills and fish oil capsules are that several pills and capsules must be taken each day. Capsules of highly concentrated fish oil are produced in order to reduce the volume, and in turn reduce the daily number of capsules required.

EP-A-0 276 772 describes a process for preparing a microdispersed, pulverulent or aqueous fish oil preparation with a high concentration of the active substances of the fish oil, in particular EPA and DHA. This preparation of fish oil may result in a reduction of the bad smell and taste of fish oil and is used in baby food and dry-powdered milk as well as supplements in bakery and other nutritional food products.

However, in order to get a complete nutritional supplement, a person must eat both vitamin pills and a number of capsules. Together with the drawbacks involved in supplementing the diet with fish oil, this causes many people to refrain from supplementing their diet with nutritional supplement, and it is therefore the object of the invention to provide a nutritional composition that overcomes the above-identified drawbacks of the conventional diet supplements.

This object is achieved by a tablet according to claim 1.

By the present invention, a comprehensive nutritional composition supplement tablet is provided where all daily nutritional supplements may be provided within a single composition, e.g. a tablet. In the fish oil granulate, a high concentration of EPA and DHA is present. Thus, the amount of fat calories are reduced in comparison with the fish oil liquid. This means that the calorie consumption in connection with the fish oil diet supplement may be reduced.

By using a microdispersed fish oil preparation in a granulate form, the "fishy" smell is eliminated. Moreover, the active substances EPA and DHA are provided in a highly concentrated form. By the invention, it is realised that this pulverised fish oil preparation may be incorporated in a comprehensive nutritional supplement in the form of a tablet.

A composition according to the invention comprises, besides EPA and DHA, a collection of vitamins and minerals. The vitamins are selected from a group of vitamins in suitable amounts that are chosen in correspondence with the recommended daily intake amount of each of the particular vitamin substances. Similarly, the minerals are chosen in accordance with the recommended daily amounts (RDA) set by nutrition experts and national nutritional and/or health authorities.

By the invention, it is realised that the nutritional composition may be designed specifically to different human requirements, such as that of children, pregnant women, young people, elderly people, etc. Moreover, it is realised that the nutritional composition may be specifically designed in accordance with specific geographic and/or cultural requirements by altering the vitamin and mineral content and the individual proportions thereof with respect to local diets and/or the mineral content in the soil.

In a preferred embodiment of a composition according to the invention, iron particles in a separately microdispersed form is added to the composition, whereby stomach trouble may be avoided.

In the preferred embodiment of a composition according to the invention, the fish oil granulate makes up 60 % by weight, the vitamin portion 2,6 % and the mineral portion 14,5 %. By this proportion, a stable tablet may be provided with a particular high content of dry omega-3 granulate.

In a first embodiment of the invention, the mineral compounds include 8-12 % calcium, 3-4.5 % magnesium, 0.3-0.45% zinc, 0.3-0.5 % iron, 0.0030-0.0060 % iodine, 0.0010-0.0020 % selenium and 0.0010-0.0020 % chrome. Hereby, the proportion of the individual minerals in relation to the recommended daily doses is essentially the same.

Similarly, in the first embodiment, the vitamins in the vitamin content includes 0.1-0.2 % β-carotene, 0.03-0.05 % vitamin B₁, 0.04-0.06 % vitamin B₂, 0.4-0.5 % vitamin B₃, 0.1-0.25 % vitamin B₅, 0.04-0.07 % vitamin B₆, 0.02-0.03 x 10⁻³ % vitamin B₁₂, 0.004-0.008 % folic acid, 0.003-0.004 % biotin, 1-2 % vitamin C, 0.1-0.2 x 10⁻³ % vitamin D₃ and 0.2-0.4 % vitamin E. Hereby, the proportion of the individual minerals in relation to the recommended daily doses is essentially the same.

In the preferred embodiment of the invention, selenium aminochelate or a sodium selenium compound is used as the selenium compound. A selenium mineral supplement is anticipated to be beneficial in terms of achieving a positive outcome in the prevention of cancer and these selenium compositions are regarded as particularly active.

A nutritional composition according to the preferred embodiment is provided with natural fragrances that are added to the composition, such as vanilla and/or other natural substances. The nutritional composition may be made more attractive by flavouring a tablet and/or providing it with an aroma. In particular, the smell of the B-vitamins in the tablet container may hereby be removed. Other added natural substances could be ginger, ginseng, garlic or imidine.

Moreover, the tablet is provided with a coating encapsulating the composition in order to neutralise the overall smell and taste of the ingredients.

The composition of the individual substances in one tablet according to the invention is such that the individual amounts correspond to approx. 20-25 % of the recommended daily doses for the particular substance. Hereby, each tablet is kept adequately small in size whilst still containing the desired ingredients in the proportionally required amounts. A tablet with 50 % or more EPA/DHA is possible if the active components of the fish oil (EPA and DHA) are sufficiently concentrated.

A nutritional composition according to the invention is prepared as a tablet. Alternatively, other forms of nutritional supplements could be used. The tablet for use as a nutritional supplement to a diet on a regular basis, e.g. on a daily basis, comprises at least 50 mg of eicosapentaenoic acid (EPA) and docosahexaenoic acid (DHA). Hereby, a reasonable proportion of the recommended daily amount of EPA and DHA may be obtained in a single tablet. The tablet including vitamin compounds comprises a selection of vitamins, mineral compounds and a selection of minerals, and fish oil granulate in dry pulverised form comprising EPA and DHA. The formation of a tablet with fish oil granulate together with other nutritional substances constitutes a complete nutritional supplement. This particular use of the fish oil granulate may improve the conventional nutritional supplements in the form of vitamin pills, since it is now possible to incorporate the active, health beneficial omega-3 fatty acids in an otherwise normal vitamin pill by the invention.

### Detailed description of some preferred embodiments of the invention:

In the following, a detailed description of some preferred embodiments of a tablet containing a nutritional composition is presented.

### Example 1

A nutritional composition according to the invention is produced in a basic tablet product. The content of the tablet is chosen in accordance with the RDA of the individual active minerals and vitamin substances of the ingredients and in such a way that a high proportional content of fish oil granulate is contained in the tablet. The contents are listed in table 1. The fish oil granulate comprises a relative high concentration of EPA and DHA in a proportion of 18:12. The proportion between EPA and DHA can be changed by preparing the fish oil granulate accordingly. E.g. it may be desirable in some cases to change the proportion to 15:15, i.e. increase the content of DHA. The amount of excipients is sufficient to produce the composition in a tablet form. The excipients could be e.g. starch, micro-crystalline cellulose, polyvidon and magnesium stearate.

### Example 2

In example 2, an alteration on the basis of the basic product is made in order to direct the nutritional supplement towards the needs for sportsmen and the like. In comparison with the basic compound, the amounts of iodine and selenium are increased, just as the amounts of vitamins B₁, B₂, B₅ and B₆ are increased. The amount of EPA/DHA remains at about 60 % in the preferred composition. The amount of excipients is slightly reduced but still sufficient in amount to produce a tablet of the composition.

### Example 3

Similar to example 2, in example 3 the basic product is also directed towards a specific category of users. The tablet in this example is intended for elderly people. Here, the amounts of calcium, magnesium, zinc, iron and chrome are increased. The amounts of β-carotene, pantothenic acid, vitamin B₁₂, folic acid, vitamin D₃ and E are also increased in comparison with the basic product. The amounts of EPA and DHA are kept the same, but the excipients are reduced but not below a critical level for being able to produce the composition in a tablet form.

**Table 1:**

| Comparative table of the compositions in the examples. | | | | |
|---|---|---|---|---|
| | **Example 1** | | **Example 2** | **Example 3** |
| **Product type:** | Basic tablet product | | Tablet for Sportsmen | Tablet for Elderly |
| | Amount | pct. by weight of active substance | pct. by weight of active substance | pct. by weight of active substance |
| **Minerals:** | | | | |
| Calcium carbonate | 250 mg | 10 % | 10 % | 11 % |
| Magnesium hydroxide | 91.5 mg | 3.75 % | 3.75 % | 4.125 % |
| Zinc oxide | 4.7 mg | 0.375 % | 0.375 % | 0.4125 % |
| Ferrofumarate | 18.8 mg | 0.35 % | 0.475 % | 0.475 % |
| Potassium iodide | 491 µg | 0.00375 % | 0.00562 % | 0.00562 % |
| Sodium Selenite | 41.7 µg | 0.00125 % | 0.00125 % | 0.00187 % |
| Chrome chloride | 64 µg | 0.00125 % | 0.00187 % | 0.00125 % |

| **Vitamins:** | | | | |
|---|---|---|---|---|
| Betatab 20 % (β-carotene) | 7.2 mg | 0.12 % | 0.12 % | 0.18 % |
| Thiamine mononitrate (Vitamin B₁) | 0.40 mg | 0.035 % | 0.0475 % | 0.035 % |
| Riboflavin (Vitamin B₂) | 0.44 mg | 0.04 % | 0.06 % | 0.04 % |
| Niacin amide (Vitamin B₃) | 4.5 mg | 0.45 % | 0.45 % | 0.45 % |
| Calcium pantothenate (Vitamin B₅) | 1.88 mg | 0.15 % | 0.225 % | 0.225 % |
| Pyridoxine hydrochloride (Vitamin B₆) | 0.57 mg | 0.05 % | 0.06 % | 0.05 % |
| Vitamin B₁₂ | 0.28 µg | 0.025 % -10⁻³ | 0.025 % -10⁻³ | 0.0375 % -10⁻³ |
| Folic acid | 62.5 µg | 0.005 % | 0.005 % | 0.0075 % |
| Biotin | 45 µg | 0.00375 % | 0.00375 % | 0.00375 % |
| Ascorbic acid (Vitamin C) | 17 mg | 1.5 % | 1.5 % | 1.5 % |
| Vitamin D₃ | 0.55 mg | 0.000125 % | 0.000125 % | 0.000187 % |
| Vitamin E | 8.2 mg | 0.25 % | 0.25 % | 0.375 % |
| | | | | |
| **Fish oil granulate** (dry n-3) | 600 mg | 60 % | 60 % | 60 % |
| including EPA/DHA 18:12 | 50 mg | | | |
| | | | | |
| Excipients and salts | | 22.86 % | 22.56 % | 21.05 % |
| | | | | |
| Total | 1226 mg | 100 % | 100 % | 100 % |

The amounts of the substances may be altered without altering the proportion of the substance. Hereby, a tablet of a different size may be obtained, e.g. a tablet with ingredients that correspond to 25 % or 30 % of the recommended daily doses. In the table, the basic product is described with reference to a tablet of approx. 1200 mg. However, it is realised by the invention that a tablet of approx. 1000 mg may be preferable by some people. Besides the size of the tablet, the shape of the tablet may also be altered to suit the preferences of the consumers.

A tablet of the nutritional composition according to the invention is produced by weighing out the predetermined dosage of the ingredients and mixing these. In a tablet forming machine, the mixture is then compressed to a tablet in a predetermined form. The tablets may subsequently be coated by a suitable tablet coating equipment and with a chosen coating solution.

Throughout the process, quality checks of the tablets are made on various parameters, such as content, weight, variation in size, harness, friability and time of decay. Other additional checks may be carried out in order to establish the nutritional content of the finished product, etc.

In the process of manufacture, the handling of the fish oil granulate may be somewhat delicate. The fish oil granulate is stored in a nitrogen environment in order to shield the granulate from exposure to oxygen. Therefore, it is important to expedite the tablet forming process during the sub-processes of dosage, blending and mixture in order to avoid an exposure time of the fish oil granulate that may cause a deterioration of the granulate.

By the invention, it is realised that the nutritional composition may be altered within the scope of the accompanying claims, e.g. the composition may comprise other minerals and/or vitamins than those mentioned above, either instead of or as a supplement to one or more of the vitamins or minerals.

## Claims

1. A tablet containing a nutritional composition for dietary supplements to a diet on a regular basis, e.g. on a daily basis, said tablet comprising:
a vitamin portion including the following proportions of the active substance relative to the total tablet weight: 0.1-0.2 % β-carotene, 0.03-0.05 % vitamin B₁, 0.04-0.06 % vitamin B₂, 0.4-0.5 % vitamin B₃, 0.1-0,25 % vitamin B₅, 0.04-0.07 % vitamin B₆, 0.02-0.03 x 10⁻³ % vitamin B₁₂, 0.004-0.008 % folic acid, 0.003-0.004 % biotin, 1-2 % vitamin C, 0.1-0,2 x 10⁻³ % vitamin D₃ and 0.2-0.4 % vitamin E
a mineral portion including the following proportions of the active substance relative to the total tablet weight: 8-12 % calcium, 3-4.5 % magnesium, 0.3-0.45% zinc, 0.3-0.5 % iron, 0.0030-0.0060 % iodine, 0.0010-0.0020 % selenium and 0.0010-0.0020 % chrome
at least 40 % by weight fish oil granulate containing microdispersed polyunsaturated fatty acids including eicosapentaenoic acid (EPA) and docosahexaenoic acid (DHA);
and wherein the content amounts of each of the selected vitamins, minerals and the fish oil content are proportionally selected in accordance with the recommended daily amounts (RDA).

2. A tablet according to claim 1, wherein iron particles in a separately microdispersed form are added to the composition.

3. A tablet according to claim 1, wherein the fish oil granulate makes up 60 % by weight, the active substances of the vitamin portion make up 2.6 % by weight and the active substances of the mineral portion make up 14.5 % by weight,

4. A tablet according to any of claims 1 to 3, wherein the mineral portion comprises selenium aminochelate.

5. A tablet according to claim 1, wherein natural fragrances are added to the composition.

6. A tablet according to claim 5, wherein the at least one natural fragrance is vanilla.

7. A tablet according to claim 5 or 6, wherein the natural fragrances are selected from a group of natural substances, such as ginger, ginseng, garlic and imidine.

8. A tablet according to claim 1, wherein the composition of the individual substances in the tablet is such that the individual amounts correspond to 20-25 % of the recommended daily doses for the particular substance.

## Patentansprüche

1. Tablette, enthaltend eine Nahrungsmittelzusammensetzung zur diätetischen Nahrungsergänzung für eine Diät auf einer regelmäßigen Basis, z.B. auf Tagesbasis, wobei die Tablette aufweist
einen Vitaminanteil, der die folgenden Anteile von aktiven Substanzen relativ zum Gesamttablettengewicht enthält: 0,1-0,2 Gew.-% β-Karotin, 0,03-0,05 Gew.-% Vitamin B₁, 0,04-0,06 Gew.-% B₂, 0,4-0,5 Gew.-% Vitamin B₃, 0,1-0,25 Gew.-% Vitamin B₅, 0,04-0,07 Gew.-% Vitamin B₆, 0,02-0,03 x 10⁻³ Gew.-% Vitamin B₁₂, 0,004-0,008 Gew.-% Folsäure, 0,003-0,004 Gew.-% Biotin, 1-2 Gew.-% Vitamin C, 0,1-0,2x 10⁻³ Gew.-% Vitamin D₃ und 0,2-0,4 Gew.-% Vitamin E.
einen Mineralanteil unter Einschluss der folgenden Anteile der aktiven Substanz relativ zum Tablettengesamtgewicht: 8-12 Gew.-% Kalzium, 3-4,5 Gew.-% Magnesium, 0,3-0,45 Gew.-% Zink, 0,3-0,5 Gew.-% Eisen, 0,0030-0,0060 Gew.-% Jod, 0,0010-0,0020 Gew.-% Selen und 0,0010-0,0020 Gew.-% Chrom,
wenigstens 40 Gew.-% Fischölgranulat aufweisend mikrodispergiertes vielfach ungesättigte Fettsäuren unter Einschluss von Eicosapentaensäure (EPA) und Docosahexaensäure /DHA);
und wobei die Anteile jeder der ausgewählten Vitamine, Mineralien und der Fischölanteil proportional gemäß der empfohlenen täglichen Dosis (RDA) ausgewählt worden sind.

2. Tablette nach Anspruch 1, wobei die Eisenpartikel in einer separat mikrodispergierter Form der Zusammensetzung zugegeben werden.

3. Tablette nach Anspruch 1, wobei das Fischölgranulat bis zu 60 Gew.-%, die aktiven Substanzen des Vitaminanteils bis zu 2,6 Gew.-% und die aktiven Substanzen des Mineralanteils bis zu 14,5 Gew.-% ausmachen.

4. Tablette nach einem der Ansprüche 1 bis 3, wobei der Mineralanteil Selenaminochelat aufweist.

5. Tablette nach Anspruch 1, wobei natürliche Duftstoffe der Zusammensetzung zugesetzt sind.

6. Tablette nach Anspruch 5, wobei wenigstens eines der natürlichen Duftstoffe Vanille ist.

7. Tablette nach Anspruch 5 oder 6, wobei die natürlichen Duftstoffe aus der Gruppe der natürlicheri Substanzen, z.B. Ingwer, Ginseng, Knoblauch und Imidin, ausgewählt sind.

8. Tablette nach Anspruch 1, wobei die Zusammensetzung der einzelnen Substanzen in der Tablette derart ist, dass die einzelnen Anteile 20-25 Gew.-% der empfohlenen täglichen Dosis für die spezielle Substanz entsprechen.

## Revendications

1. Comprimé contenant une composition nutritionnelle pour suppléments diététiques destinés à être administrés régulièrement, par exemple quotidiennement, ledit comprimé comprenant :
une portion vitaminique incluant les proportions suivantes de la substance active par rapport à la masse totale du comprimé : 0,1 à 0,2 % de β-carotène, 0,03 à 0,05 % de vitamine B₁, 0,04 à 0,06 % de vitamine B₂, 0,4 à 0,5 % de vitamine B₃, 0,1 à 0,25 % de vitamine B₅, 0,04 à 0,07 % de vitamine B₆, 0,02 à 0,03 x 10⁻³ % de vitamine B₁₂, 0,004 à 0,008 % d'acide folique, 0,003 à 0,004 % de biotine, 1 à 2 % de vitamine C, 0,1 à 0,2 x 10⁻³ % de vitamine D₃ et 0,2 à 0,4 % de vitamine E
une portion minérale incluant les proportions suivantes de la substance active par rapport à la masse totale du comprimé : 8 à 12 % de calcium, 3 à 4,5 % de magnésium, 0,3 à 0,45 % de zinc, 0,3 à 0,5 % de fer, 0,0030 à 0,0060 % d'iode, 0,0010 à 0,0020 % de sélénium et 0,0010 à 0,0020 % de chrome
au moins 40 % en masse de granulé d'huile de poisson contenant des acides gras polyinsaturés microdispersés, dont l'acide eicosapentaénoïque (EPA) et l'acide docosahexaénoïque (DHA) ;
et dans lequel la quantité de chacun des minéraux et vitamines sélectionnés et la teneur en huile de poisson sont sélectionnées proportionnellement conformément aux apports quotidiens recommandés (AQR).

2. Comprimé selon la revendication 1, dans lequel des particules de fer sont ajoutées à la composition, séparément, sous une forme microdispersée.

3. Comprimé selon la revendication 1, dans lequel le granulé d'huile de poisson représente 60 % en masse, les substances actives de la portion vitaminique représentent 2,6 % en masse et les substances actives de la portion minérale représentent 14,5 % en masse.

4. Comprimé selon l'une quelconque des revendications 1 à 3, dans lequel la portion minérale comprend de l'aminochélate de sélénium.

5. Comprimé selon la revendication 1, dans lequel des arômes naturels sont ajoutés à la composition.

6. Comprimé selon la revendication 5, dans lequel au moins un arôme naturel est la vanille.

7. Comprimé selon la revendication 5 ou 6, dans lequel les arômes naturels sont sélectionnés dans un groupe de substances naturelles telles que le gingembre, le ginseng, l'ail et l'imidine.

8. Comprimé selon la revendication 1, dans lequel la composition des substances individuelles dans le comprimé est telle que les quantités individuelles correspondent à 20 à 25 % des doses quotidiennes recommandées pour la substance particulière.
